# EUROPEAN PATENT SPECIFICATION

(11) **EP 0 566 176 B1**
(45) Date of publication and mention of the grant of the patent: **21.08.1996**
(21) Application number: 93200844.4
(22) Date of filing: 24.03.1993
(51) Int. Cl.: B26D 7/06, B65G 53/56

(54) **A device for cutting tuberous crops**
Vorrichtung zum Schneiden von Waren, zum Beispiel Kartoffeln
Dispositif pour couper des légumes, par exemple pommes de terre

(30) Priority: 25.03.1992 NL 9200545
(43) Date of publication of application: 20.10.1993
(73) Proprietor: Kiremko B.V., NL-3417 ZG Montfoort (NL)
(72) Inventor: Kamerbeek, Theunis, 3417 WX Montfoort (NL)
(74) Representative: Vollebregt, Cornelis Jacobus, Ir.

(56) References cited:
- DE-B- 1 186 673
- FR-A- 2 189 656
- US-A- 2 586 144
- US-A- 4 157 848

## Description

The invention relates to a device for cutting tuberous crops, such as potatoes, said device being provided with a frame and with a pipe system supported by said frame, through which a fluid with tuberous crops present therein can be pumped by means of a pump whilst a cutting mechanism is accommodated within said pipe system and a directing means is provided between two parts of the pipe system, upstream of the cutting mechanism said directing means bridging the gap between the facing ends of said two parts of the pipe system and being provided with a jacket of a flexible material, which comprises a passage which narrows in a direction of flow, whereby the directing means comprises also support means surrounding and supporting the jacket, extending in the longitudinal direction of the jacket and being connected to a first flange provided at the upstream end of the directing means and the device further includes adjusting means for pivoting the jacket support means, said adjusting means being disposed near the end of the jacket remote from said first flange.

Such a device is known from DE-A-1186673. In this known device the jacket is clamped down by means of a flange and bolts on the wall of a casing accommodating the jacket near one end. The mouth of the other end is located near an opening provided in the casing, to which a pipe part containing the cutting mechanism is connected.

With this known device the directing means comprising the jacket can only be removed by dismounting a considerable part of the device. In addition to that there will be leakage losses, which wil have an adverse effect on the efficiency of the device.

According to the invention the directing means of the aforementioned known device further comprise a second flange near the downstream end of the directing means, the jacket extending between the first and the second flange, hold-down means being secured to the frame between said flanges, said hold-down means being movable between a first position wherein said hold-down means press the flanges away from each other against corresponding abutting surfaces provided on the facing ends of said two parts of the pipe system and a second position wherein said hold-down means release said flanges.

By using the construction according to the invention the direcmeans can be locked in position in the device and be detached in a simple manner, so that the directing means can be mounted and removed quickly and simply, which will considerably facilitate any necessary maintenance work on the device. Furthermore any leakage losses near the directing means are excluded.

The invention will be explained in more detail hereafter with reference to an embodiment of the construction according to the invention diagrammatically illustrated in the accompanying Figures.

Figure 1 is a diagrammatic perspective view of a device according to the invention.

Figure 2 is a larger-scale plan view of the adjustable pipe part.

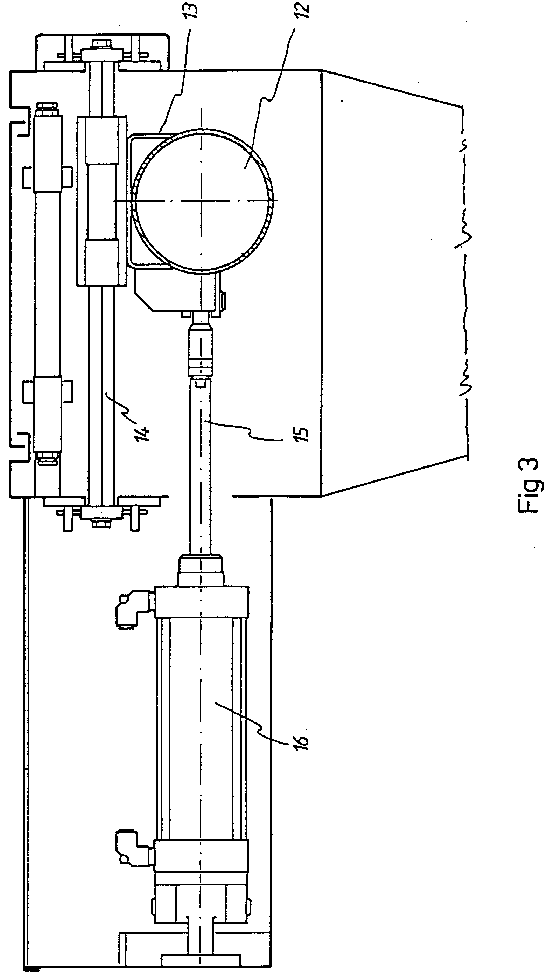

Figure 3 is a larger-scale cross-sectional view of Figure 2.

Figure 4 is a plan view of a directing means and a cutting mechanism positioned therebehind.

Figure 5 is a side view of Figure 4, wherein certain parts have been left out for easy reference.

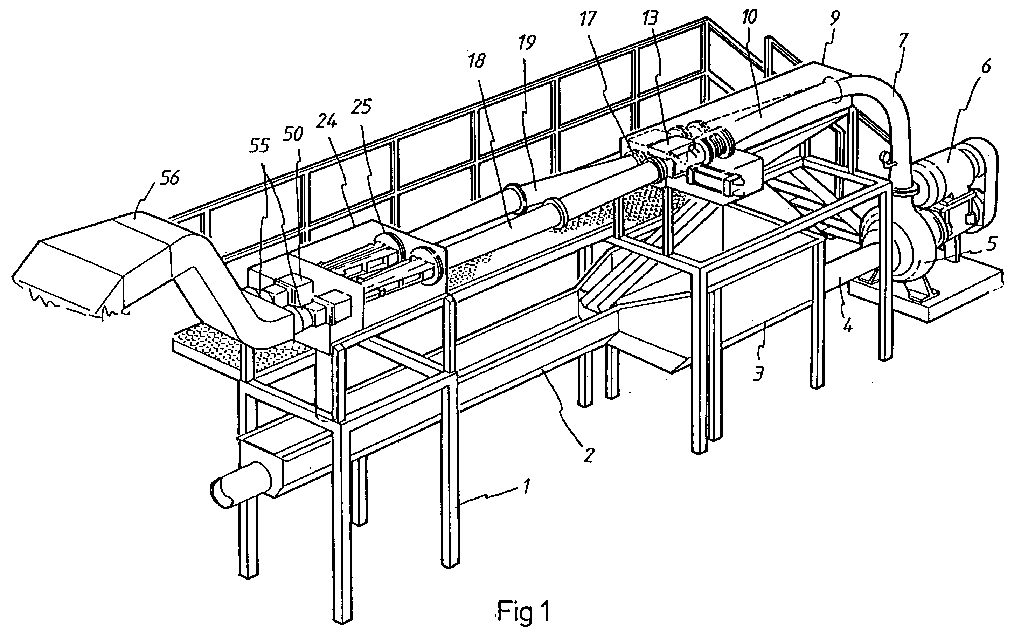

The device according to the invention shown in Figure 1 comprises a frame 1, which supports a trough 2, which opens into a reservoir 3, in which the tuberous crops to be cut, such as for example potatoes, are supplied (in a manner not shown) to the water contained therein. The reservoir 3 is connected to the suction side of a pump 5 by means of a connecting pipe 4, which pump can be driven by means of a motor 6.

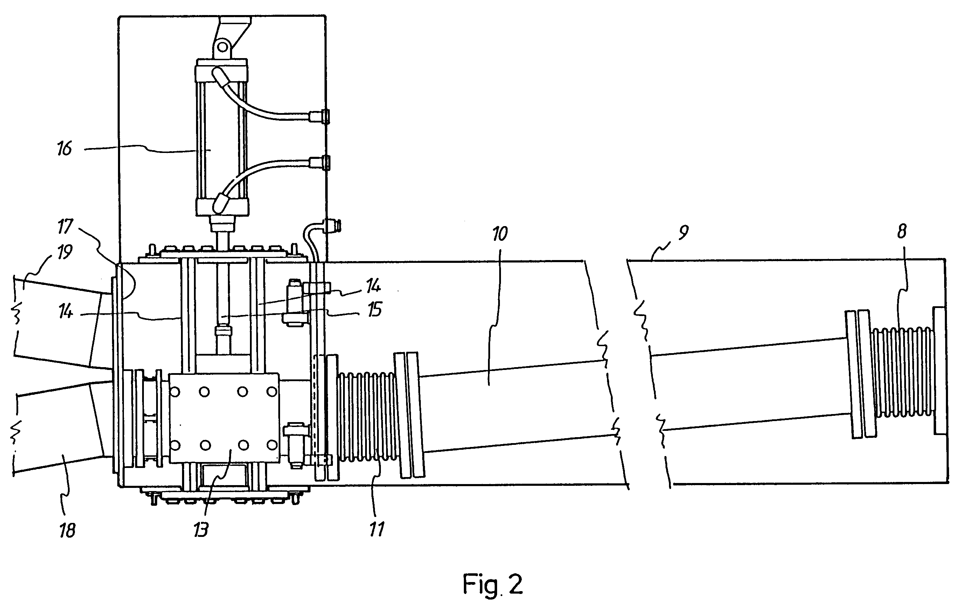

A pipe part 7 is connected to the delivery side of the pump 5, said pipe part 7 at its end remote from the pump connecting to a resilient bellows 8 (Figure 2), which is accommodated in a casing 9 supported by the frame. The bellows 8 forms the connection between the pipe part 7 and a further pipe part 10. At its end remote from the bellows 8 the pipe part 10 is connected, through a resilient bellows 11, to a coupling piece 13 provided with a passage 12. Said coupling piece 13 is movably supported by means of two rods 14 secured to the walls of the casing 9, said rods crossing the longitudinal axis of the passage 12 perpendicularly.

To the coupling piece 13 there is furthermore connected the end of a piston rod 15 of a setting cylinder 16, by means of which the coupling piece can be moved reciprocatingly in the longitudinal direction of the rods 14.

The end of the coupling piece 13 remote from the resilient bellows 11 sealingly abuts against an end partition 17 of the casing 9. Two pipe parts 18 and 19 are connected to the outer side of said partition 17.

It will be apparent that in the position of the coupling piece 13 shown in Figure 2 the passage 12 in said coupling piece provides communication between the pipe part 10 and the pipe part 18. From this position the coupling piece 13 can be moved by means of the setting cylinder 16 to a position (shown in dotted lines in Figure 1) in which the passage 12 in the coupling piece 13 provides communication between the pipe part 10 and the pipe part 19.

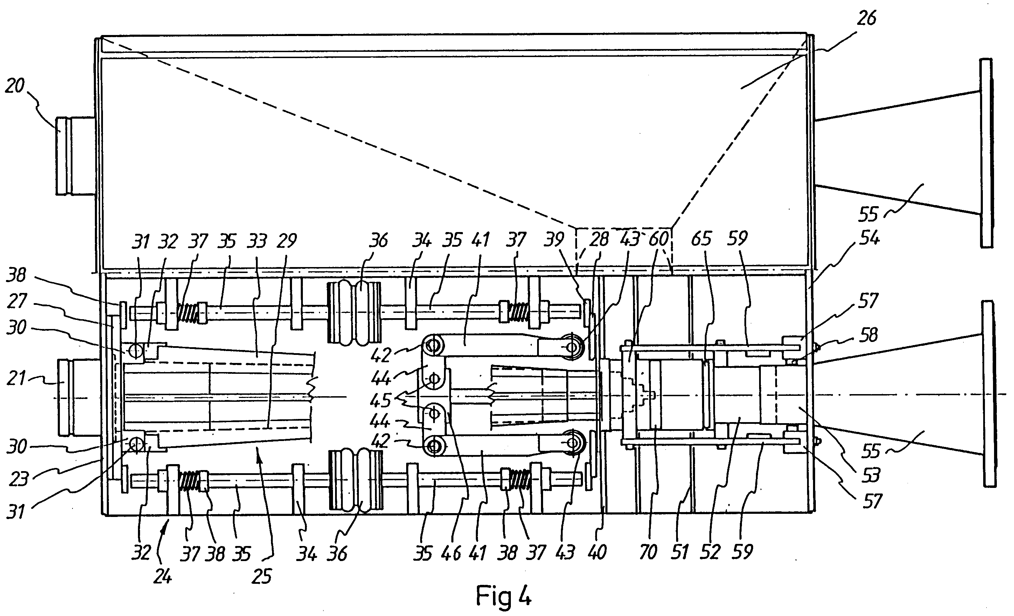

The pipe parts 18 and 19 connect to stubs 20 and 21 respectively with their ends remote from the casing 9, said stubs being secured to an upright partition 23 of a casing 24. Two directing means 25 are located inside the casing 24, only one being shown in Figure 4, the other being located under a cover 26 closing the respective part of the casing 24 at its upper side.

The directing means 25 comprises two flanges 27 and 28, a rubber hose 29 (only diagrammatically indicated) extending between said flanges.

Ears 30 are secured to the flange 27, said ears accommodating vertically extending pivot pins 31. Connecting blocks 32 are pivotable about said pivot pins 31, plates 33 surrounding said rubber hose being secured to said connecting blocks.

As will be apparent in particular from Figure 4 thereby, the diameter of the hose 29 gradually decreases in downstream direction and the shape of the plates or wings 33 surrounding the hose is adapted thereto.

Four rods 35 extending parallel to the central axis of the hose 29 are journalled so as to have lengthwise movement in ears 34 secured to walls of the casing 24. When seen in plan view the rods 35 are thereby arranged in pairs, being in line with each other, on either side of the directing means 25. An air bellows 36 is disposed between each pair of aligned rods 35. Furthermore each rod 35 is surrounded by a compression spring 37, which is confined between an ear 34 supporting the respective rod and a ring 38 secured to said rod. The ends of the rods 35 remote from the bellows 36 are located opposite ears 38 and 39 secured to the flanges 27 and 28 respectively.

When a pressurized fluid, such as for example pressurized air, is admitted into the bellows 36, the ends of the rods 35 remote from the bellows 36 will be pressed against the ears 38 and 39, so as to press the flange 27 firmly against the partition 23 of the casing 24 and to press the flange 28 firmly against a partition 40 of the casing 24. When the pressure in the bellows 36 is released, the springs 37 will force the aligned rods 35 in a direction towards each other, as a result of which the flanges 27, 28 will be released by the rods and the directing means 25 can be removed.

It will be apparent that the mounting and removing of the directing means can thus be effected in a particularly quick and simple manner.

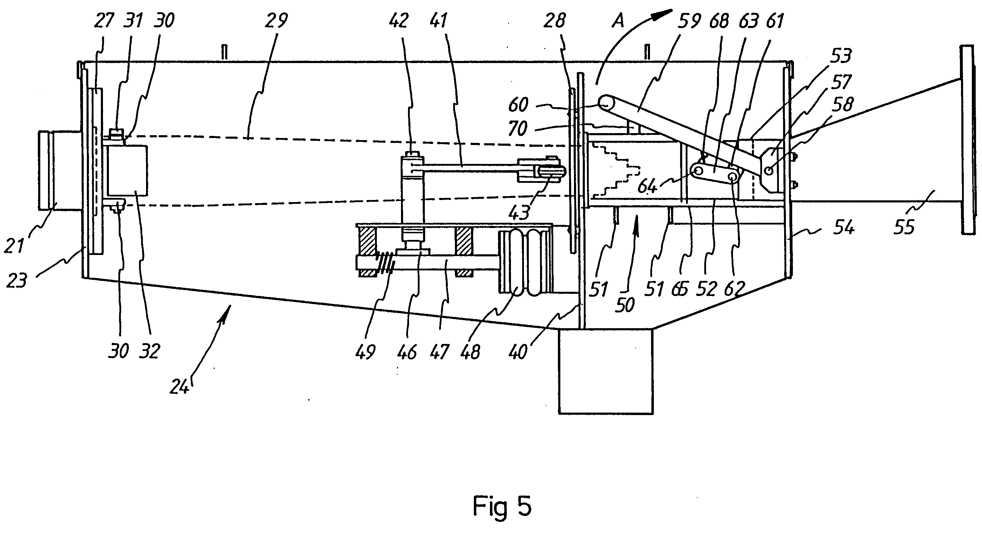

As furthermore appears from Figures 4 and 5, arms 41 are disposed beside the directing means, when seen in plan view, said arms each being connected near one end to a vertical pivot pin 42. The free ends of the arms support rollers 43. The pivot pins 42 are connected to arms 44 extending transversely to the arms 41. Pins 45 are secured to the free ends of the arms 44, said pins extending into a block 46. The sliding block 46 is secured to a rod 47, which is movable against the spring force exerted by a spring 49 surrounding the rod 47 when a pressurized fluid is supplied to the bellows. It will be apparent, that by moving the rod 47 the rollers 43 secured to the free ends of the arms 41 can be pressed against the free ends of the plates or wings 33, which are pivotable about the pins 31, in order to more or less close the rubber hose 29 forming part of the directing means 25.

As is furthermore illustrated in Figures 4 and 5 a block-shaped cutting mechanism 50 abuts against the side of the partition 40 remote from the directing means, said cutting mechanism resting on supports 51 provided in the casing 24. The block-shaped cutting mechanism 50 conventionally comprises a passage, in which cutting means are provided for cutting tuberous crops, such as potatoes, into desired chips, slices or the like.

At the side remote from the partition 40 the end of a tube section 52 abuts against the cutting mechanism 50, said tube section being slidably accommodated in a further tube section 53, which is secured to a partition 54 of the casing 24. A stub 55 is connected to the outer side of the casing, said stub being connected to a discharge pipe 56 (Figure 1).

On either side of the stub 53 U-shaped supports 57 are secured to the partition 54, aligned pins 58 being located in said supports, whose central axes intersect the central axis of the stub 53 perpendicularly.

Lever arms 59 are pivotable about the pins 58, the ends of said lever arms 59 being interconnected by means of a cross rod 60 forming a grip.

Near the pins 58 a downwardly extending ear 61 is secured to each of the lever arms 59. One end of a coupling plate 63 is pivotably coupled to the ear 61 of the respective lever arm 59 by means of a pin 62 extending parallel to the pins 58.

The other end of the coupling plate 63 is coupled to the end of the tube section 52 directed towards the cutting mechanism 50 by means of a pin 64 extending parallel to the pin 62. Said latter end of the tube section 52 is provided with a flange 65, which engagingly surrounds the end of the cutting mechanism 50 directed towards the flange with a protruding collar.

As is apparent from Figure 5, the central axes of the pins 64 intersect the central axis of the passage through the tube section 52 perpendicularly, whilst in this illustrated operating position the central axes of the pins 62 are located under the plane through the central axes of the pins 64 and 58. In this position an adjusting bolt 68 secured to a lever arm 59 is furthermore supported on the coupling plate 63, so that the lever 59 cannot be pressed down any further.

When the levers 59 are pivoted from the illustrated position in the direction according to arrow A, the coupling plates 63 will pivot in anti-clockwise direction about the pins 64, whereby the pins 62 are moved through the plane through central axes of the pins 64 and 58, thereby passing a so-called dead centre, as it were. Upon further pivoting of the levers 59 in the direction according to arrow A the sleeve 52 will be slightly moved in a direction away from the cutting mechanism 50, as a result of which said cutting mechanism will take up a free position between the partition 40 and the flange 65, capable of being lifted up by means of a grip 70 secured to the upper side of the cutting mechanism. The cutting mechanism can thus be readily exchanged for another cutting mechanism, which can be placed on the supporting strips 51 in the position shown in Figure 5 again. After that the levers 59 can be pivoted in a direction opposed to the arrow A again, whereby the flange 65 of the sleeve 52 will be pressed firmly against the end of the cutting mechanism 50 again and whereby the cutting mechanism 50 will be pressed firmly against the partition 40, whilst after passing the aforesaid dead centre the mounting mechanism for the cutting mechanism 50 will be locked and the cutting mechanism 50 will not be unlocked before a force is exerted on the levers 59 in the direction according to arrow A.

During operation the fluid, usually water, and the tuberous crops present therein, such as potatoes, will be sucked in from the reservoir 3 by the pump and, with the arrangement shown in Figure 1, be pumped into the pipe part 18 through the pipe parts 7 and 10 and the connecting piece 13. From the pipe part 18 the flow will take place through the directing means 25 connected to the pipe part 18, in which the tuberous crops are oriented in such a manner that in lengthwise they extend at least substantially parallel to the direction of flow, in order to be moved through the cutting mechanism 50 in this position. The chipped products move from the cutting mechanism 50 into the discharge pipe 56, which discharges the product towards a screen (not shown), where the chipped products and the water are separated, whereby the separated water can be led back to the reservoir 3 via the trough 2.

When for example a blockage occurs in the directing means or when the cutting mechanism being in use needs to be exchanged for another cutting mechanism for some reason, the connecting piece 13 can be moved from the position shown in the Figures in such a manner, that the pipe part 10 is put into communication with the pipe part 19, so that an unimpeded passage of the tuberous crops through the device can be effected.

Possibly means may for example be provided which effect such an adjustment when the pressure in the pipe 18 or the pipe 19, through which the tuberous crops are transported, exceeds a predetermined value.

As is furthermore explained above, both the directing means and the cutting mechanism can be readily detached or locked in position, so that a quick detachment or mounting of both a directing mechanism and a cutting mechanism can be realized.

## Claims

1. A device for cutting tuberous crops, such as potatoes, said device being provided with a frame (1) and with a pipe system (7, 10, 18, 19) supported by said frame, through which a fluid with tuberous crops present therein can be pumped by means of a pump (5), whilst a cutting mechanism (50) is accommodated within said pipe system (7, 10, 18, 19) and a directing means (25) is provided between two parts of the pipe system, upstream of the cutting mechanism (50), said directing means bridging the gap between the facing ends (23, 40) of said two parts of the pipe system and being provided with a jacket (29) of a flexible material, which comprises a passage which narrows in a direction of flow, whereby the directing means (25) comprises also support means (33) surrounding and supporting the jacket (29), extending in the longitudinal direction of the jacket and being connected to a first flange (27) provided at the upstream end of the directing means (25) and the device further includes adjusting means (41-48) for pivoting the jacket support means (33), said adjusting means (41-48) being disposed near the end of the jacket (29) remote from said first flange (27), characterised in that said directing means (25) further comprise a second flange (28) near the downstream end of the directing means (25), the jacket extending between the first (27) and the second (28) flange, hold-down means (35, 36) being secured to the frame (1) between said flanges (27, 28), said hold-down means (35, 36) being movable between a first position wherein said hold-down means press the flanges (27, 28) away from each other against corresponding abutting surfaces provided on the facing ends (23, 40) of said two parts of the pipe system and a second position wherein said hold-down means (35, 36) release said flanges (27, 28).

2. A device according to claim 1, characterised in that said hold-down means (35, 36) comprise rods (35) arranged in pairs on either side of the directing means (25) and are movable against spring force (37) in their longitudinal direction by means of an adjusting means (36) provided between said rods (35) and by means of which the ends of the rods (35) remote from the adjusting means (36) can be pressed against the respective flanges (27, 28).

3. A device according to claim 2, characterised in that said adjusting means is formed by a bellows (36), to which a pressurized fluid can be supplied.

4. A device according to any one of the preceding claims, characterised in that said device is provided with two cutting mechanisms (50) arranged in side-by-side relationship, each of said cutting mechanisms (50) at an upstream end being in communication with a directing means (25), whilst a pipe part (10) located upstream of said directing means is provided with a coupling piece (13), which can be pivoted from a first position, in which the coupling piece (13) is in communication with a part (18) of the pipe system connecting to a first directing means (25), into a second position, in which said coupling piece (13) is in communication with an other part (19) of the pipe system connecting to a second directing means (25).

5. A device according to claim 4, characterised in that the adjustable pipe part (10) is connected to the coupling piece (13) via a resilient bellows (11) near one of its ends and to a further part (7) of the pipe system , via a resilient bellows (8), near its other end.

6. A device according to claim 4 or 5, characterised in that the coupling piece (13) is movably supported by two rods (14), along which the coupling piece (13) is movable.

7. A device according to any one of the claims 4-6, characterised in that the end of the coupling piece (13) remote from the adjustable pipe part (10) is movable along a partition (17), to which two further parts (18, 19) of the pipe system are connected at the side remote from the coupling piece.

8. A device according to any one of the preceding claims, characterised in that the cutting mechanism (50) can be locked in position by means of a clamping mechanism (58-64).

9. A device according to claim 8, characterised in that said clamping mechanism acts on a tube section (52), which is slidably accommodated in the device, said tube section (52) engaging one end of the cutting mechanism (50), so as to press the cutting mechanism (50) firmly against a partition of the device.

10. A device according to claim 8 or 9, characterised in that a lever (59), which is pivotable about a pivot pin (58) with respect to the frame (1), is coupled to the movable tube section (52) by means of a coupling piece (63), wherein said coupling piece (63) is pivotally coupled to both the tube section (52) and the lever (59), the construction being such that in the clamped-down position of the cutting mechanism (50) the pivoting point (62) between the lever and the coupling piece (63) is located at one side of a plane through the pivoting point (64) between the tube section (52) and the coupling piece (63) and the pivot pin (58) about which the lever (59) is pivotable with respect to the frame, and that in the released position of the cutting mechanism (50) the pivoting pin (62) between the lever (59) and the coupling piece (63) is located at the other side of said plane.

## Patentansprüche

1. Vorrichtung zum Schneiden von Knollenfrüchten, wie Kartoffeln, mit einem Gestell (1) und einem Rohrsystem (7,10,18,19) am Gestell, durch welches ein Strömungsmittel mit Knollenfrüchten darin von einer Pumpe (5) gepumpt werden kann, während eine Schneideinrichtung (50) in dem Rohrsystem (7,10,18,19) untergebracht ist, und Leitmittel (25) zwischen zwei Abschnitten des Rohrsystems stromauf der Schneideinrichtung (50) vorgesehen sind, die Leitmittel die Lücke zwischen den zugekehrten Enden (23,40) der beiden Abschnitte des Rohrsystems überbrücken und mit einer Manschette (29) aus elastischem Werkstoff versehen sind, die Manschette einen Kanal bildet, der sich in Strömungsrichtung verengt, die Leitmittel (25) auch Abstützmittel (33) aufweisen, welche die Manschette (29) umgeben und abstützen, sich in Längsrichtung der Manschette erstrecken und an einem ersten Flansch (27) stromauf des Endes der Leitmittel befestigt sind und die Vorrichtung ferner Einstellmittel (41-48) zum Verschwenken der Manschettenabstützmittel (33) aufweisen, die Einstellmittel (41-48) nahe dem Ende der Manschette (29) entfernt vom ersten Flansch (27) angeordnet sind, dadurch gekennzeichnet, daß die Leitmittel (25) ferner einen zweiten Flansch (28) nahe dem abströmseitigen Ende der Leitmittel (25) aufweisen, die Manschette sich zwischen dem ersten (27) und dem zweiten (28) Flansch erstreckt, Niederhaltemittel (35,36) am Gestell (1) zwischen den Flanschen (27,28) befestigt sind, die Niederhaltemittel (35,36) zwischen einer ersten Position, in der die Niederhaltemittel die Flansche (27,28) voneinander weg an entsprechende Anschlagflächen an den zugekehrten Enden (23,40) der beiden Abschnitte des Rohrsystems pressen und einer zweiten Position bewegbar sind, in der die Niederhaltemittel (35,36) die Flansche (27,28) freigeben.

2. Vorrichtung nach Anspruch 1, dadurch gekennzeichnet, daß die Niederhaltemittel (35,36) Stangen (35) aufweisen, die paarweise auf jeder Seite der Leitmittel (25) angeordnet und entgegen Federkraft (37) in Längsrichtung mittels Einstellmitteln (36) zwischen den Stangen (35) bewegbar sind und mittels derer die Enden der Stangen (35), die den Einstellmitteln (36) entfernt sind, an die zugehörigen Flansche (27,28) angepreßt werden können.

3. Vorrichtung nach Anspruch 2, dadurch gekennzeichnet, daß die Einstellmittel von einem Balgen (36) gebildet sind, dem ein Druckmittel zugeführt werden kann.

4. Vorrichtung nach einem der vorhergehenden Ansprüche, dadurch gekennzeichnet, daß die Vorrichtung mit zwei Schneideinrichtungen (50) nebeneinander versehen ist, jede Schneideinrichtung (50) am stromaufseitigen Ende in Verbindung mit einem Leitmittel (25) ist, während ein Rohrabschnitt (10) stromauf der Leitmittel mit einem Kupplungsstück (13) versehen ist, das aus einer ersten Lage, in der das Kupplungsstück (13) in Verbindung mit einem Abschnitt (18) des Rohrsystems zur Verbindung mit einem ersten Leitmittel (25) steht, in eine zweite Lage verschwenkbar ist, in der das Kupplungsstück (13) in Verbindung mit einem anderen Abschnitt (19) des Rohrsystems zur Verbindung mit einem zweiten Leitmittel (25) steht.

5. Vorrichtung nach Anspruch 4, dadurch gekennzeichnet, daß der einstellbare Rohrabschnitt (10) mit dem Kupplungsstück (13) über elastische Balgen (11) nahe einem seiner Enden und mit einem weiteren Abschnitt (7) des Rohrsystems über einen elastischen Balgen (8) nahe seinem anderen Ende verbunden ist.

6. Vorrichtung nach Anspruch 4 oder 5, dadurch gekennzeichnet, daß das Kupplungsstück (13) von den beiden Stangen (14) bewegbar abgestützt ist, und das Kupplungsstück (13) längs der Stangen bewegbar ist.

7. Vorrichtung nach einem der Ansprüche 4 bis 6, dadurch gekennzeichnet, daß das vom einstellbaren Rohrabschnitt (10) entfernte Ende des Kupplungsstücks (13) längs einer Trennwand (17) bewegbar ist, mit der die beiden weiteren Abschnitte (18,19) des Rohrsystems an der dem Kupplungsstück entfernten Seite verbunden sind.

8. Vorrichtung nach einem der vorhergehenden Ansprüche, dadurch gekennzeichnet, daß die Schneideinrichtung (50) von einer Klemmeinrichtung (58-64) in ihrer Lage fixiert werden kann.

9. Vorrichtung nach Anspruch 8, dadurch gekennzeichnet, daß die Klemmeinrichtung auf einen Rohrabschnitt (52) wirkt, der in der Vorrichtung verschiebbar untergebracht ist, wobei der Rohrabschnitt (52) ein Ende der Schneideinrichtung (50) erfaßt, um die Schneideinrichtung (50) an eine Trennwand der Vorrichtung anzudrücken.

10. Vorrichtung nach Anspruch 8 oder 9, dadurch gekennzeichnet, daß ein Hebel (59), der um einen Schwenkzapfen (58) gegenüber dem Gestell (1) schwenkbar ist, mittels eines Kupplungsstückes (63) an den bewegbaren Rohrabschnitt (52) gekuppelt ist, wobei das Kupplungsstück (63) schwenkbar mit dem Rohrabschnitt (52) und dem Hebel (59) gekuppelt ist, und die Anordnung so getroffen ist, daß in der festgeklemmten Lage der Schneideinrichtung (50) der Schwenkpunkt (62) zwischen dem Hebel und dem Kupplungsstück (63) auf einer Seite einer Ebene liegt, die durch den Schwenkpunkt (64) zwischen dem Rohrabschnitt (52) und dem Kupplungsstück (65) und dem Schwenkbolzen (58) geht, um den der Hebel (59) gegenüber dem Gestell schwenkbar ist, und daß in der freigegebenen Lage der Schneideinrichtung (50) der Schwenkbolzen (62) zwischen dem Hebel (59) und dem Kupplungsstück (63) auf der anderen Seite der Ebene liegt.

## Revendications

1. Dispositif pour couper des tubercules, comme les pommes de terre, ledit dispositif étant muni d'un bâti (1) et d'un système de tuyauterie (7, 10, 18, 19) supporté par ledit bâti, dans lequel un fluide contenant les tubercules peut être pompé au moyen d'une pompe (5), tandis qu'un mécanisme de coupe (50) est contenu dans ledit système de tuyauterie (7, 10, 18, 19) et un moyen de direction (25) est prévu entre deux parties du système de tuyauterie, en amont du mécanisme de coupe (50), ledit moyen de direction comblant l'espace entre les faces d'extrémités (23, 40) desdites deux parties du système de tuyauterie et étant muni d'une chemise (29) de matériau flexible, qui comporte un conduit qui devient plus étroit dans une direction d'écoulement, où le moyen de direction (25) comprend aussi un moyen de support (33) entourant et supportant la chemise (29), s'étendant dans la direction longitudinale de la chemise et étant relié à une première bride (27) prévue à l'extrémité amont du moyen de direction (25) et où le dispositif comprend en outre un moyen de réglage (41-48) pour faire pivoter le moyen de support de chemise (33), ledit moyen de réglage (41-48) étant disposé près de l'extrémité de la chemise (29) éloignée de ladite première bride (27), caractérisé en ce que ledit moyen de direction (25) comprend en outre une deuxième bride (28) près de l'extrémité aval du moyen de direction (25), la chemise s'étendant entre la première bride (27) et la deuxième bride (28), un moyen de retenue (35, 36) étant fixé au bâti (1) entre lesdites brides (27, 28), ledit moyen de retenue (35, 36) étant mobile entre une première position dans laquelle ledit moyen de retenue pousse les brides (27, 28) dans des directions opposées contre les surfaces d'aboutement prévues sur les faces d'extrémités (23, 40) desdites deux parties du système de tuyauterie et une deuxième position dans laquelle ledit moyen de retenue (35, 36) libère lesdites brides (27, 28).

2. Dispositif selon la revendication 1, caractérisé en ce que le moyen de retenue (35, 36) comprend des barres (35) disposées en paires de chaque côté du moyen de direction (25) et mobiles contre la force d'un ressort (37) dans leur direction longitudinale au moyen d'un moyen de réglage (36) prévu entre lesdites barres (35) et au moyen duquel les extrémités des barres (35) éloignées du moyen de réglage (36) peuvent être poussées contre les brides respectives (27, 28).

3. Dispositif selon la revendication 2, caractérisé en ce que ledit moyen de réglage est formé d'un soufflet (36) auquel peut être fourni un fluide pressurisé.

4. Dispositif selon l'une quelconque des revendications précédentes, caractérisé en ce que ledit dispositif est muni de deux mécanismes de coupe (50) disposés côte à côte, chacun desdits mécanismes de coupe (50) à une extrémité amont étant en communication avec un moyen de direction (25), tandis qu'une partie de tuyauterie (10) située en amont dudit moyen de direction est munie d'une pièce d'accouplement (13) qui peut pivoter à partir d'une première position, dans laquelle la pièce d'accouplement (13) est en communication avec une partie (18) du système de tuyauterie reliée à un premier moyen de direction (25), dans une deuxième position dans laquelle ladite pièce d'accouplement (13) est en communication avec une autre partie (19) du système de tuyauterie reliée à un deuxième moyen de direction (25).

5. Dispositif selon la revendication 4, caractérisé en ce que la partie de tuyauterie réglable (10) est reliée à la pièce d'accouplement (13) par l'intermédiaire d'un soufflet flexible (11) près d'une de ses extrémités et à une autre partie (7) du système de tuyauterie, par l'intermédiaire d'un soufflet flexible (8), près de son autre extrémité.

6. Dispositif selon la revendication 4 ou 5, caractérisé en ce que la pièce d'accouplement (13) est supportée de manière mobile par deux barres (14) le long desquelles la pièce d'accouplement (13) est mobile.

7. Dispositif selon l'une quelconque des revendications 4-6, caractérisé en ce que l'extrémité de la pièce d'accouplement (13) éloignée de la partie de tuyauterie réglable (10) est mobile le long d'une cloison (17), à laquelle sont reliées deux autres parties (18, 19) du système de tuyauterie du côté éloigné de la pièce d'accouplement.

8. Dispositif selon l'une quelconque des revendications précédentes, caractérisé en ce que le mécanisme de coupe (50) peut être bloqué en position au moyen d'un mécanisme de serrage (58-64).

9. Dispositif selon la revendication 8, caractérisé en ce que ledit mécanisme de serrage agit sur une section de tube (52) qui est logée de manière coulissante dans le dispositif, ladite section de tube (52) engageant une extrémité du mécanisme de coupe (50), de manière à pousser fermement le mécanisme de coupe (50) contre une cloison du dispositif.

10. Dispositif selon la revendication 8 ou 9, caractérisé en ce qu'un levier (59), qui peut pivoter autour d'un axe de pivotement (58) par rapport au bâti (1), est couplé à la section de tube mobile (52) au moyen d'une pièce d'accouplement (63), dans lequel ladite pièce d'accouplement (63) est couplée de manière pivotante à la section de tube (52) et au levier (59), la construction étant telle que dans la position serrée du mécanisme de coupe (50), le point de pivotement (62) entre le levier et la pièce d'accouplement (63) est situé d'un côté d'un plan passant par le point de pivotement (64) entre la section de tube (52) et la pièce d'accouplement (63) et l'axe de pivot (58) autour duquel le levier (59) peut pivoter par rapport au bâti, et que dans la position desserrée du mécanisme de coupe (50), l'axe de pivotement (62) entre le levier (59) et la pièce d'accouplement (63) est situé de l'autre côté dudit plan.
